# EUROPEAN PATENT APPLICATION

(11) **EP 1 764 013 A2**
(43) Date of publication of application: **21.03.2007**
(21) Application number: 05020321.5
(22) Date of filing: 17.09.2005
(51) Int. Cl.: A47B 96/20, E06B 3/48

(54) **Method of continously producing multi-part foldable panels**

(71) Applicant: Isoroy, 94523 Rungis Cedex (FR)
(72) Inventor: Marion, Olivier, 71200 Le Creusot (FR); Cossin, Sebastien, 71200 Saint Sernin du Bois (FR)
(74) Representative: Rehberg Hüppe + Partner

(57) **Abstract**

A method of continuously producing multi-foldable panels having a plurality of jointed panel segments (1-3) comprises the steps of continuously forwarding the panel segments (1-3) in a main direction; simultaneously with forwarding the panel segments arranging the panel segments in a flat side-by-side-configuration; and jointing the panel segments by fixing flexible tapes (10) to their small faces (9) extending in the main direction, the panel segments (1-3) being jointed in two areas opposing each other across the panel segments at the same time. Particularly, at least three panel segments are arranged in the flat side-by-side-configuration; and a central segment (2) which is arranged to other panel segments (1-3) in the flat side-by-side configuration of panel segments is either only jointed to one of the two other panel segments (1 or 3) in one of the two areas and to the other of the two other panel segments (3 or 1) in the other of the two areas, or jointed to both of the two other panel segments (1 and 3) in both of the two areas, one of the two joints between the central segment (2) and each of the two other panel segments (1 and 3) being subsequently removed.

## Description

The invention relates to a method of continuously producing multi-part foldable panels having a plurality of jointed panel segments, the method comprising the steps of the preamble of claim 1.

A foldable panel produced according to the invention can be used as a rear panel of a cabinet or any other piece of furniture. It will be typically made of a medium to high density fibreboard. The end of the foldability of the panel is a reduction of the overall dimensions of the panel. This is an important aspect, when the piece of furniture is shipped in parts for assembly at its point of use, because the rear panel typically is that part of a two- or multi-door cabinet having the biggest dimensions.

### PRIOR ART

Foldable panels to which the present invention is related may also be used as interior fittings, for room dividers, for the construction of containers etc.

A method of continuously producing multi-part foldable panels according to the preamble of claim 1 is known from EP 1 532 895 A1. In this known method two raw one-part panels each having a pair of opposing straight edges and a pair of opposing untrimmed edges are arranged into a flat side-by-side configuration. In this flat side-by-side configuration one straight edge of the one panel is aligned with one straight edge of the other panel. Then, the untrimmed edges of both one-part panels are trimmed simultaneously in two areas opposing each other across the panel segments. Next, flexible tapes are fixed to each of the two opposing pairs of simultaneously trimmed edges of both one-part panels for forming to joints between the two one-part panels. At last, the two jointed one-part panels are cut perpendicular to their straight edges into two folding panels both having two segments each resulting from one of the two one-part panels. This known method is well suited for a mass production of two-part foldable panels. However, it is impossible to apply it for the production of multipart foldable panels having more than two jointed panel segments.

### PROBLEM OF THE INVENTION

It is a problem of the intention to provide a method of continuously producing multi-part foldable panels according to the preamble of claim 1 which allows for the production of foldable panels having more than two jointed panel segments to even further reduce the overall dimensions of the folded panel during transport.

### SOLUTION

The problem of the invention is solved by a method of continuously producing multi-part foldable panels according to claim 1. Preferred embodiments of this new method are defined in dependent claims 2 to 10.

### DESCRIPTION OF THE INVENTION

In the new method at least three panel segments are arranged in a flat side-by-side configuration. Thus, there is at least one central segment which is arranged between to other panel segments in the flat side-by-side configuration of panel segments. In one of two variants of the new method this central segment is only jointed to one of the two other panel segments in one of the two areas opposing each other across the panel segments, and to the other of the two other panel segments in the other of the two areas opposing each other across the panel segments. Thus, one joint is formed between the central panel and one of the other two panels in one area, and one joint in formed between the central segment and the other of the two panel segments in the other area. The resulting foldable panel comprises at least these three panel segments jointed in a foldable way so that the unfolded panel comprises the central segment in the middle and the two other panel segments on both sides of the middle. In the other variant of the new method the central segment is jointed to both of the two other panel segments in both of the two areas opposing each other across the panel segments. This, however, does not yet result in a ready product. Thus, a further step has to be done in which one of the two joints between the central segment and each of the two other panel segments is subsequently removed. After this additional step the product of the second variant of the new method is similar to that one of the first variant in that it is an at least three-part foldable panel which in its unfolded state has the central segment in the middle and the two other segments on both sides of the central segment. Both variants of the new method can be continuously carried out at a high speed in a high volume production plant. The second variant of the new method additionally providing for a high symmetry with regard to the processing of the panel segments until a half of the joints being removed.

In both variants of the new method the small faces of all panel segments of the flat side-by-side configuration of the panel segments may be aligned by pressing rollers pressing the flexible tapes against the panel segments to be jointed. These pressing rollers may also extend over small faces of those panel segments which are not jointed in that particular area of the pressing roller.

The small faces of the panel segments to be jointed can be cut in the continuously forwarded panel segments prior to fixing the flexible tape. This means that the small faces are cut into the panel segments which are in the flat side-by-side configuration so that the small faces of all panel segments are automatically perfectly aligned in the flat side-by-side configuration of the panel segments.

In the second variant of the new method, one of the two joints between the central segment and each of the two other panel segment can be removed by cutting through the flexible tape between the respective panel segments. This can be accomplished with a fixed knife or with a rotating tool rotating about a fixed axis, for example, the arrangement of panel segments being moved in the main direction with regard to the knife or the rotating tool. A rotating tool can also be used to selectively remove the tape from that other panel segment which is not to be jointed in that respective area to the central segment in the final product.

The panel segments may be pressed together in their flat side-by-side configuration during fixing the tapes to their small faces, and also during cutting the small faces prior to fixing the tape, if this particular step is additionally carried out. However, this pressing together does not require a high force as the panel segments are simultaneously processed in two areas opposing each other with regard to the main direction in which the panel segments are forwarded. Thus, there are per se no unbalanced forces acting upon the arrangement of panel segments.

Pressing rollers leaning against the free big faces of the two outer panel segments of the flat side-by-side configuration of panel segments may be used for pressing the panel segments together. They may also simply be pressed together by a conveyor belt or by conveyor chains placed on top the panel segments for forwarding them.

In the new method, the tapes for jointing the panel segments may be fibre reinforced tapes. The tapes are preferably only fixed to the small faces of the panel segments. However it is also possible that the tapes extend over small portions of the big faces of the outer panel segments.

Preferably a hot melt is used as an adhesive for fixing the tapes to the panel segments.

### BRIEF DESCRIPTION OF THE DRAWINGS

In the following the invention is further explained and described by means of preferred embodiments thereof, and with reference to the enclosed drawings.
- **Fig. 1**: shows a flat side-by-side configuration of raw panel segments in a front view.
- **Fig. 2**: shows the step of cutting small faces into the arrangement of panel segments according to Fig. 1 in a top view.
- **Fig. 3**: shows the flat side-by-side-arrangement with cut edges in a front view.
- **Fig. 4**: shows fixing flexible tapes to the cut edges of the arrangement according to Fig. 3 in a top view.
- **Fig. 5**: shows fixing the flexible tapes to the cut edges of the arrangement according to Fig. 3 in a front view.
- **Fig. 6**: shows cutting through the flexible tapes in a front view.
- **Fig. 7**: shows partially removing the flexible tape in a front view which is an alternative with regard to cutting through the flexible tapes according to Fig. 6.

- **Fig. 8**: shows fixing flexible tapes to only some of the small faces of the flat side-by-side configuration according to fig. 3 which is an alternative to fixing the flexible tapes to all small faces and subsequently cutting through or partially removing the flexible tapes.
- **Fig. 9**: shows unfolding the product resulting from the method steps according to Fig. 6, 7 or 8; and
- **Fig. 10**: shows the unfolded multi-part foldable panel.

### DESCRIBTION OF PREFERRED EMBODIMENTS OF THE INVENTION

In the following, the invention is further explained and described by means of different embodiment examples of the new method. All these embodiment examples are related to the continuous production of a three-part foldable panel. However, it is clear, that the new method could also easily be used to produce multi-part foldable panels having a number of panel segments higher than three.

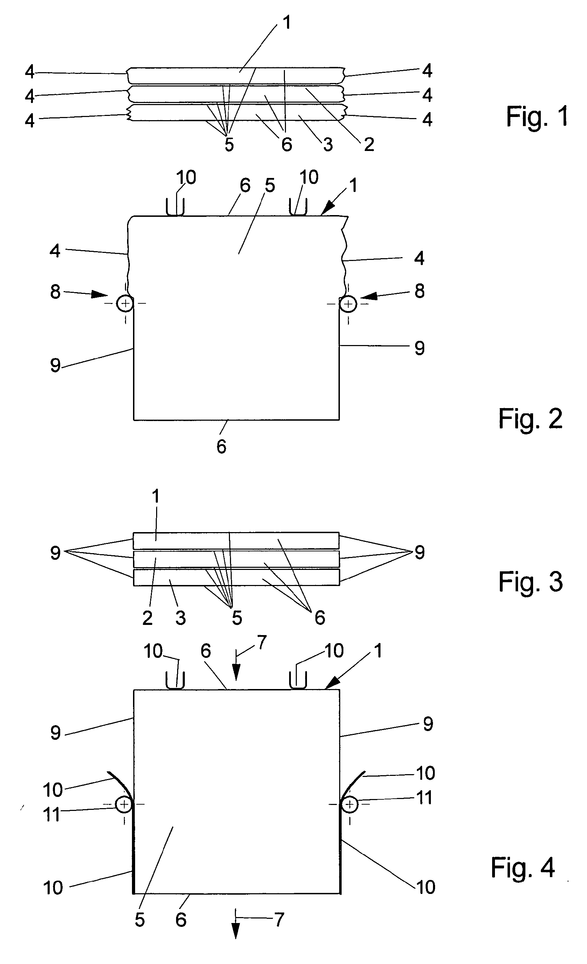

If the new method starts from raw panel segments 1, 2 and 3 which still have uncut small faces 4, the panel segments 1 to 3 are first arranged into a flat side-by-side configuration which is shown in **Fig. 1.** In this configuration a top panel segment 1, a central panel segment 2 and a lower panel segment 3 abut against each other via their big faces 5 which are oriented horizontally. Further, already cut small faces 6 of the panel segments 1 to 3 are arranged within two common vertical planes.

According to **Fig. 2** the flat side-by-side configuration of the panel segments 1 to 3 is forwarded in a main direction 7 with regard to cutting tools 8 arranged in two areas opposing each other across the panel segments 1 to 3. The cutting tools 8 cut small faces 9 into the uncut small faces 4, which cut small faces 9 extend perpendicular to the already previously cut small faces 6. The alignment of the small faces 6 with regard to the small faces 9 can simply be effected by forwarding means 10 abutting against the already cut small faces 6 and properly oriented with regard to the cutting tools 8.

The result of the cutting step according to Fig. 2 is the flat side-by-side configuration of the panel segments 1 to 3 shown in **Fig. 3.** Here, not only the previously cut small faces 6 but also the small faces 9 cut according to Fig. 3 are arranged in common vertical plains.

According to **Fig. 4** flexible tapes 10 are fixed to all cut small faces 9, one flexible tape 10 being fixed to all small faces 9 extending in one common plain. Particularly, the flexible tapes 10 are fixed to the cut small faces 9 in two areas having the same position in the main direction 7 and opposing each other across the panel segments 1, while the panel segments 1 to 3 are forwarded. Pressing rollers 11 pressing the flexible tapes 10 against the cut small faces 9 also stabilize the flat side-by-side-arrangement of the panel segments 1 to 3. A further stabilization of this arrangement may be effected by further pressing rollers pressing against the upper big face 5 of the upper panel segment 1.

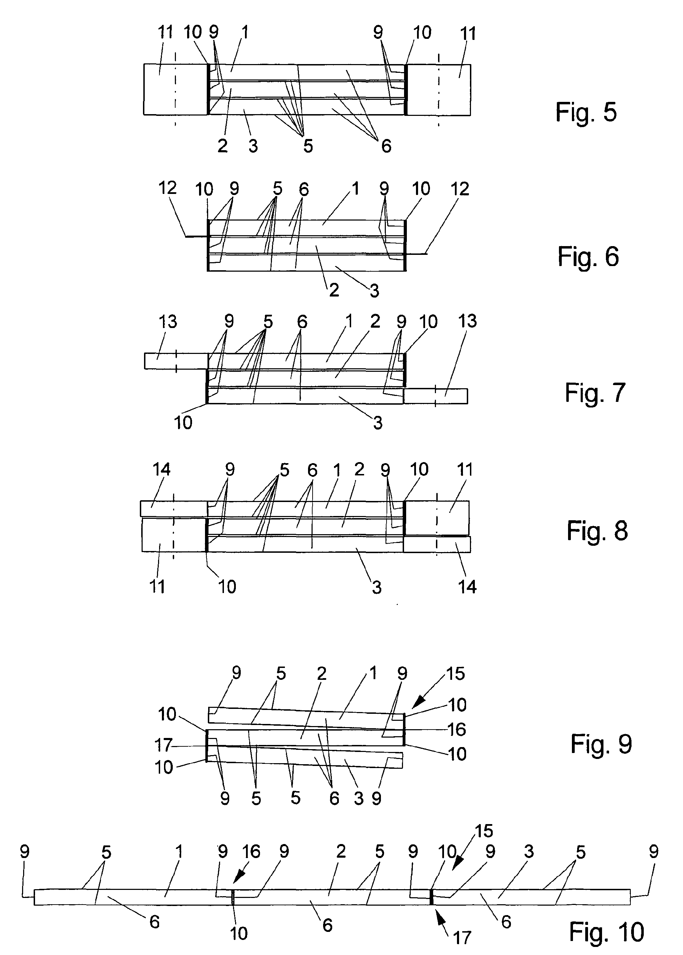

**Fig. 5** shows that the flexible tapes 10 cover all of the cut small faces 9 arranged within one vertical plain. Thus, the product of the method step shown in Figs. 4 and 5 is not yet a foldable panel, as the panel segments 1 to 3 may not yet be unfolded.

**Fig. 6** shows one possibility to enable an unfolding movement of the panel segments 1 to 3 with regard to each other. Two knifes 12 are used to cut through the flexible tapes 10. Whereas one knife 12 on the one side of the arrangement of the panel segments 1 to 3 cuts through the flexible tape 10 between the panel segments 1 and 2, the other knife 12 on the other side cuts through the flexible tape 10 between the panel segments 2 and 3. In this way some of the joints between the panel segments 1 to 3 are selectively removed.

Such a removal can also be accomplished in the way shown in **Fig. 7.** Here, the flexible tapes 10 are partial removed from the small faces 9 by means of rotating tools 13. One rotating tool 13 on one side of the arrangement of the panel segments 1 to 3 removes the flexible tape 10 from the small face 9 of the upper panel segment 1, and the other rotating tool 13 removes the flexible tape 10 from the small face 9 of the lower panel segment 3.

In another version of the method described here, the flexible tape 10 is only selectively fixed to some of the small faces 9 on both sides of the flat side-by-side configuration of the panel segments 1 to 3. This is shown in **Fig. 8.** Here, the flexible tape 10 is on one side only fixed to the small faces 9 of the panel segments 2 and 3, and on the other side only do the small faces 9 of the panel segments 1 and 2. The remaining small faces 9 of the panel segments 1 and 3 may, however, also be supported by extensions 14 of the pressing rollers 11 pressing the flexible tapes 10 against the small faces 9. The extensions 14 of the pressing rollers 11 supporting the small faces 9 of the panel segments 1 to 3 to which no flexible tape is fixed stabilize the side-by-side configuration of the panel segments 1 to 3.

The result of either method step according to Fig. 6, Fig. 7 or Fig. 8 is a foldable panel 15 according to **Fig. 9.** In the foldable panel 15, a joint 16 is formed between the panel segments 1 and 2 on one side of the central panel segment 2 by the flexible tape 10 connecting adjacent faces of these two panel segments 1 and 2. On the other side of the central panel segment 2 a further joint 17 is formed between the panel segments 2 and 3 by the flexible tape 10 fixed to adjacent small faces 9 of these two panel segments.

**Fig. 10** shows the unfolded foldable panel 15 in which all panel segments 1 to 3 are arranged in one common plain. In the areas of the joints 16 and 17, the flexible tape 10 is bent into an U-shape between the adjacent panel segments 1 and 2 and 2 and 3, respectively. The particular method used to produce the foldable panel 15 has an influence on the actual foldable panel 15. If, for example, the method according to Fig. 6 was used, the outer small faces 9 will also be covered by the flexible tape 10.

If the new method does not start from raw panel segments, it may directly start from the flat side-by-side arrangement shown in Fig. 3. Further, if the method step according to Fig. 8 is applied, it is not necessary, that all panel segments 1 to 3 have the same width. For example, the diameter of the extensions 14 of the pressing rollers 11 may be bigger or smaller than the diameter of the pressing rollers 11 themselves to compensate for a smaller or bigger width of the panel segments 1 and/or 3 which are supported by these extensions 14.

### LIST OF REFERENCE NUMERALS

- 1: panel segment
- 2: panel segment
- 3: panel segment
- 4: uncut small face
- 5: big face
- 6: cut small face
- 7: main direction
- 8: cutting tool
- 9: cut small face
- 10: flexible tape
- 11: pressing roller
- 12: knife
- 13: rotating tool
- 14: extension (of pressing roller11)
- 15: foldable panel
- 16: joint
- 17: joint

## Claims

1. A method of continuously producing multi-part foldable panels having a plurality of jointed panel segments, the method comprising the steps of:
- continuously forwarding the panel segments in a main direction;
- simultaneously with forwarding the panel segments:
- arranging the panel segments in a flat side-by-side configuration; and
- jointing the panel segments by fixing flexible tapes to their small faces extending in the main direction, the panel segments being jointed in two areas opposing each other across the panel segments at the same time;
**characterized in**
- **that** at least three panel segments (1-3) are arranged in the flat side-by-side configuration; and
- **that** a central segment (2) which is arranged between two other panel segments (1 and 3) in the flat side-by-side configuration of panel segments (1-3) is
- either only jointed to one of the two other panel segments (1 or 3) in one of the two areas and to the other of the two other panel segments (3 or 1) in the other of the two areas, or
- jointed to both of the two other panel segments (1 to 3) in both of the two areas, one of the two joints between the central segment (2) and each of the two other panel segments (1 or 3) being subsequently removed.

2. The method of claim 1, wherein the small faces (9) of all panel segments (1-3) of the flat side-by-side configuration of panel segments (1-3) are aligned by pressing rollers (11) pressing the flexible tapes (10) against the panel segments (1 to 3) to be jointed.

3. The method of claim 1 or 2, wherein the small faces (9) of the panel segments (1-3) to be jointed are cut in the continuously forwarded panel segments (1 to 3) prior to fixing the flexible tapes (10).

4. The method of claim 1, 2 or 3, wherein one of the two joints between the central segment (2) and each of the two other panel segments (1 and 3) is removed by cutting through the tapes (10) between the respective panel segments (1 and 2; 2 and 3).

5. The method of claim 4, wherein cutting through the tapes (10) between the respective panel segments (1 and 2; 2 and 3) is accomplished with a fixed knife.

6. The method of claim 4, wherein cutting through the tapes (10) between the respective panel segments (1 and 2; 2 and 3) is accomplished with a rotating tool.

7. The method of any of the claims 1 to 6, wherein the panel segments (1 to 3) in the flat side-by-side configuration of panel segments (1 to 3) are pressed together during fixing the tapes to the small faces.

8. The method of claim 7, wherein the panel segments (1-3) are pressed together by means of pressing rollers leaning against the free big faces (5) of the two outer panel segments (1 and 3) of the flat side-by-side configuration of panel segments (1-3).

9. The method of any of the claims 1 to 8, wherein the tapes are fibre reinforced tapes.

10. The method of any of the claims 1 to 6, wherein the tapes are fixed to the panel segments (1 to 3) by means of a hot melt.
